# FASCICULE DE BREVET EUROPEEN

(11) **EP 0 772 504 B1**
(45) Date de publication et mention de la délivrance du brevet: **23.09.1998**
(21) Numéro de dépôt: 95926436.7
(22) Date de dépôt: 27.07.1995
(51) Int. Cl.: B22F 9/30, B22F 9/24

(54) **PROCEDE D'OBTENTION DE POUDRES DE FER OU A BASE DE FER PAR PRECIPITATION EN PHASE LIQUIDE ORGANIQUE**
VERFAHREN ZUR HERSTELLUNG VON EISENPULVER ODER EISENBASISPULVER DURCH AUSFALLUNG IN FLÜSSIGER ORGANISCHER PHASE
METHOD FOR OBTAINING IRON OR IRON-BASED POWDERS BY ORGANIC LIQUID PHASE PRECIPITATION

(30) Priorité: 29.07.1994 FR 9409437
(43) Date de publication de la demande: 14.05.1997
(73) Titulaire: COMMISSARIAT A L'ENERGIE ATOMIQUE ( CEA), 75015 Paris (FR)
(72) Inventeur: VIAU, Guillaume, F-75020 Paris (FR); FIEVET, Fernand, F-75019 Paris (FR); FIEVET, Françoise, F-75019 Paris (FR)
(74) Mandataire: Des Termes, Monique
(86) Numéro de dépôt international: FR9501010
(87) Numéro de publication internationale: WO9604088

(56) Documents cités:
- EP-A- 0 113 281
- EP-A- 0 154 548
- EP-A- 0 367 159

## Description

La présente invention concerne un procédé d'obtention de poudres de fer ou à base de fer par précipitation en phase liquide organique. Les poudres obtenues se présentent sous forme finement divisée et sont composées de particules submicroniques et homogènes en taille.

Les besoins industriels de poudres fines à base de fer sont très importants, soit comme précurseurs à la fabrication de pièces mécaniques par frittage, soit pour l'élaboration de matériaux composites, soit encore utilisés telles quelles comme c'est le cas pour la reprographie électrostatique.

D'autre part, les métaux ferromagnétiques sont utilisés sous forme de poudres, suivant la composition chimique et la morphologie des particules, pour les systèmes d'enregistrement ou de lecture magnétiques ainsi que dans les matériaux granulaires à fortes pertes magnétiques hyperfréquences.

On connaît de nombreux procédés d'élaboration de poudres de fer ou à base de fer. Ils font appel à des techniques diverses.

Parmi toutes les méthodes de production de poudres métalliques à base de fer, il faut distinguer deux grandes classes de procédés : les méthodes dites physiques et celles dites chimiques.

Les premières, dont les deux techniques principales sont le broyage et l'atomisation, consistent en une transformation morphologique de fer déjà sous forme métallique. Dans la plupart des cas, les poudres obtenues par ces procédés sont formées de particules de taille moyenne supérieure à la dizaine de µm et la forme des particules est quelconque. Si l'atomisation a l'avantage sur le broyage de donner, dans certaines conditions, des poudres sphériques, dans les deux cas, la dispersion de taille est très importante. Ces types de procédés sont généralement inadaptés à la fabrication de poudres monodisperses.

Les secondes méthodes impliquent une transformation chimique d'un précurseur en poudre métallique. Elles peuvent avoir lieu en phase solide, liquide ou gazeuse.

Les méthodes en phase solide ou gazeuse donnent des poudres de grande pureté chimique mais généralement avec une large dispersion de la taille des particules.

Si l'on excepte la méthode électrochimique, qui consiste à réduire des sels de fer en solution au contact d'une électrode tournante par imposition d'une différence de potentiel et qui donne des poudres de grande pureté chimique, mais en l'absence de contrôle de la forme et de la taille des particules, les méthodes chimiques en phase liquide permettent la fabrication de poudres fines dont la taille moyenne des particules est de l'ordre du µm ou du dixième de µm avec de plus un contrôle de la morphologie et une faible dispersion de taille.

Dans les méthodes chimiques, il convient de distinguer deux types de réactions : les décompositions et les réductions.

La décomposition du fer carbonyle (par voie liquide ou gazeuse) en poudre de fer métallique donne des poudres sphériques et relativement homogènes en taille, microniques ou submicroniques suivant les conditions opératoires. L'inconvénient de cette méthode réside dans le fait qu'un volume important de monoxyde de carbone est produit au cours de la réaction. De plus, cette méthode ne permet pas la synthèse de poudres polymétalliques fer-nickel ou fer-cobalt.

Parmi les méthodes chimiques utilisant le phénomène de réduction, il faut d'abord citer les réductions d'oxydes de fer solides par divers réducteurs. Le procédé Höganäs utilise le coke pour réduire de l'oxyde de fer broyé. La poudre obtenue est composée de particules spongieuses, sans morphologie particulière et de taille moyenne de quelques dizaines de µm. D'autres procédés utilisent l'hydrogène gazeux, mettant en oeuvre des températures de réaction élevées. En contrôlant la morphologie de la poudre d'oxyde de départ, certains auteurs ont réussi, dans des cas particuliers, à contrôler la morphologie de la poudre métallique réduite.

Les réductions en phase liquide ont lieu dans des conditions beaucoup plus douces de température et de pression et la morphologie des poudres obtenues est indépendante de celle des précurseurs, car la première étape de ce type de réaction est en général la dissolution des précurseurs dans un solvant. Le réducteur et les sels métalliques dissous réagissent en solution pour donner le métal qui précipite. Le contrôle de la taille des particules métalliques dépend du procédé utilisé et nécessite le contrôle des différentes étapes réactionnelles.

Les borohydrures sont utilisés en solution aqueuse pour réduire des sels de fer ou de cobalt en poudres fines de taille contrôlée, mais les poudres ainsi formées sont des alliages métal-bore.

La réduction de sels métalliques en milieu liquide organique par des métaux alcalins comme le lithium ou le sodium peut donner des poudres de fer et d'autres métaux, mais les particules produites n'ont apparemment pas de morphologie particulière.

Le document EP-A-O-113 281 décrit un procédé de réduction de composés métalliques en milieu polyol liquide. Ce procédé est connu sous le nom de "procédé polyol". Il n'y a pas dans ce cas addition de réducteur supplémentaire, mais c'est le polyol qui joue à la fois le rôle de solvant et de réducteur. Ce procédé permet l'obtention de poudres métalliques, notamment de cobalt et de nickel, avec le contrôle de la taille et de la forme des particules. Mais il ne permet pas l'obtention de fer sous forme métallique ni pur, ni associé au nickel ou au cobalt.

Le procédé polyol présente de nombreux avantages, notamment quant à la qualité des poudres obtenues. Aussi, les inventeurs de la présente invention ont cherché à adapter le procédé polyol de manière à élaborer des poudres métalliques fines à base de fer. Ils ont réussi à mettre au point une méthode qui présente de nombreux avantages. Elle est simple à mettre en oeuvre, fait intervenir une réaction en phase liquide dans des conditions douces de température et de pression, sans addition de réducteur supplémentaire. Elle permet enfin de contrôler la morphologie des poudres formées. La taille submicronique des particules obtenues, leur faible dispersion de taille, leur morphologie contrôlée les rendent particulièrement intéressantes pour le frittage et pour l'obtention de matériaux composites de hautes performances magnétiques.

Selon une variante principale de l'invention, on utilise une solution alcaline de polyol qui permet l'obtention du fer par dismutation du fer (II) en fer (III) et en fer métallique (degré d'oxydation O). La présence d'une base forte dissoute dans le polyol rend possible cette réaction de dismutation du fer (II). On observe la précipitation du fer métallique, les espèces fer (III) restant en solution. On peut donc recueillir du fer pur.

Dans le procédé polyol classique, les métaux sont obtenus par réduction des précurseurs en solution. Dans le cas de l'invention, le mécanisme réactionnel est donc tout à fait différent d'une réduction. Lors de la coprécipitation de fer et d'un autre métal, le cobalt ou le nickel, la méthode mise au point permet de faire coïncider deux types de mécanismes réactionnels, dismutation et réduction, pour former des poudres polymétalliques.

L'invention a donc pour objet un procédé d'obtention d'une poudre de fer comprenant éventuellement du nickel et/ou du cobalt, par précipitation en phase liquide organique, comportant les étapes de :
- introduction d'un précurseur du fer au degré d'oxydation (II) et éventuellement d'un précurseur du nickel au degré d'oxydation (II) et/ou d'un précurseur du cobalt au degré d'oxydation (II) dans une solution basique de polyol ou d'un mélange de polyols pour obtenir un milieu réactionnel,
- chauffage du milieu réactionnel à une température permettant d'éliminer l'eau et les produits volatils du milieu réactionnel et d'obtenir un précipité de fer comprenant éventuellement du nickel et/ou du cobalt,
- récupération du précipité et traitement de ce précipité pour obtenir ladite poudre.

Le polyol utilisé, par exemple l'éthylèneglycol, le propylèneglycol ou le diéthylèneglycol pour ne citer que les plus courants sont à la fois solvants des précurseurs, le milieu réactionnel de la dismutation du fer (II), réducteurs des espèces cobalt (II) et nickel (II) et milieu de croissance des particules métalliques.

La solution alcaline de polyol peut être préparée préalablement par dissolution d'une base forte (soude ou potasse par exemple) dans un polyol. La concentration de la base peut être variable.

Les précurseurs utilisés sont des sels de fer au degré d'oxydation (II) non oxydé en fer (III), des sels de cobalt (II) et de nickel (II). Ces sels doivent être au moins partiellement solubles dans le polyol pour que la réaction puisse avoir lieu. Les chlorures et les acétates sont par exemple de bons précurseurs.

Les inventeurs se sont également aperçus, et cela constitue une variante secondaire de l'invention, que des particules métalliques de fer, de nickel ou de fer-nickel peuvent être également obtenues dans certains alcools simples tels que pentanol-1 ou l'octanol-1 par dismutation du Fe(II) et/ou par réduction du Ni(II). On opère également dans ces alcools simples en présence d'une base forte, par exemple NaOH. Le Fe(III) produit lors de la dismutation se trouve sous forme de Fe₃O₄ lequel est nettement moins soluble, dans les conditions de température et de basicité du milieu, dans ces alcools simples que dans les polyols. En conséquence, dans ces alcools simples, les poudres de fer ou de fer-nickel obtenues présentent toujours l'inconvénient d'être mélangées avec des particules de magnétite Fe₃O₄, alors que dans les polyols utilisés le Fe(III) reste en solution.

L'invention a donc aussi pour objet un procédé d'obtention d'une poudre de fer comprenant éventuellement du nickel, par précipitation en phase liquide organique, comportant les étapes de :
- introduction d'un précurseur du fer au degré d'oxydation (II) et éventuellement d'un précurseur du nickel au degré d'oxydation (II) dans une solution basique d'alcool simple ou d'un mélange d'alcools simples pour obtenir un milieu réactionnel,
- chauffage dudit milieu réactionnel à une température au moins égale à 100°C permettant éventuellement d'éliminer l'eau et les produits volatils du milieu réactionnel et d'obtenir un précipité de fer comprenant éventuellement du nickel,
- récupération du précipité et traitement de ce précipité pour obtenir ladite poudre.

L'invention a également pour objet les poudres métalliques obtenues par le procédé décrit ci-dessus, et en particulier les poudres métalliques décrites ci-après dans la partie expérimentale.

L'invention sera mieux comprise et d'autres avantages et particularités apparaîtront à la lecture de la description qui va suivre, donnée à titre d'exemple non limitatif.

Les poudres sont obtenues par précipitation du fer, ou coprécipitation des différents métaux, en milieu polyol liquide ou alcool simple liquide selon le cas. La procédure est la suivante : le précurseur du fer (ou le mélange de précurseurs des métaux correspondants désirés) est introduit dans une solution basique de polyol (ou d'alcool simple le cas échéant). Ce mélange est agité mécaniquement et est porté à une température inférieure ou égale à la température d'ébullition du polyol (ou de l'alcool) à pression ambiante. Il est maintenu à cette température pendant un certain temps. L'eau et les produits volatils de la réaction sont éliminés du milieu réactionnel par distillation sous pression atmosphérique ou sous pression réduite. La poudre métallique précipite dans la solution. Après la fin de la réaction, la solution est centrifugée. La poudre recueillie est lavée successivement à l'alcool, à l'eau acidifiée pour éliminer la base forte et enfin à l'acétone pour éliminer l'eau. La poudre est séchée à 50°C à l'étuve ou sous pression réduite.

Les exemples 1 à 11 suivants décrivent des modes d'obtention de poudres de fer, de poudres de fer-nickel, de fer-cobalt et de fer-cobalt-nickel conformément à l'invention.

### Exemple 1 : Obtention d'une poudre de fer grâce à un polyol.

On utilise comme produit de départ le chlorure ferreux hydraté FeCl₂, 4H₂O solide commercialisé par la Société Prolabo. 15 g de ce produit sont mis en suspension dans 400 cm³ de propylèneglycol (ou propane-diol 1,2) dans un réacteur sphérique. Sont ajoutés à cette suspension 20 g d'hydroxyde de sodium NaOH, en pastilles. Le réacteur est placé dans un chauffe-ballon. Il est surmonté d'un couvercle sur lequel vient s'adapter une colonne à distiller. La suspension est agitée mécaniquement. Le mélange est chauffé à ébullition et maintenu à la température d'ébullition pendant quatre heures. L'eau est distillée au cours du chauffage. Après refroidissement de la suspension, la poudre est séparée de la solution par centrifugation et lavée plusieurs fois à l'alcool. Examinée par diffraction des rayons X, la poudre obtenue est un mélange de chlorure de sodium NaCl et de fer cristallisé dans la phase Fe-α. Le chlorure de sodium est éliminé par lavage à l'eau. La poudre finale est fortement magnétique et un nouvel examen aux rayons X montre qu'on a une poudre de fer pur. L'analyse chimique de cette poudre révèle la présence de carbone et d'oxygène à des taux massiques respectifs de 0,5 % et 2 %. La microscopie à balayage montre que la poudre obtenue est composée de fines particules isotropes non agglomérées, assez homogènes en taille et de diamètre moyen 0,4 µm.

### Exemple 2 : Obtention d'une poudre de fer grâce à un polyol.

De façon analogue, la même quantité de chlorure de fer (II) tétrahydraté est mise en suspension avec 32 g d'hydroxyde de sodium dans 400 cm³ d'éthylèneglycol (ou éthane-diol 1,2). La poudre de fer métallique obtenue après un traitement identique à celui de l'exemple 1, est composée de très fines particules, de diamètre moyen 0,1 µm et agglomérées.

### Exemple 3 : Obtention d'une poudre de fer grâce à un polyol.

De façon analogue, la même quantité de chlorure de fer (II) tétrahydraté est mise en suspension avec 32 g d'hydroxyde de sodium dans 400 cm³ de propylèneglycol. La suspension est chauffée et maintenue à 140°C pendant 4 heures sous pression réduite, ce qui permet d'éliminer l'eau par distillation. La poudre de fer obtenue est composée de fines particules peu agglomérées et de diamètre moyen 0,4 µm.

### Exemple 4 : Obtention d'une poudre de fer grâce à un alcool simple.

On dissout 10 g d'hydroxyde de sodium dans 250 cm³ de pentanol-1 en portant la solution à 105°C. Sont ajoutés à cette solution 9,5 g de chlorure de fer (II) tétrahydraté sous forme solide. Le mélange est maintenu à 105°C pendant 30 minutes. La poudre recueillie par centrifugation et lavages répétés à l'éthanol, à l'eau puis à l'acétone, analysée par diffraction des rayons X, est constituée d'un mélange de magnétite Fe₃O₄ et de Fe-α dans des proportions comparables. Elle est composée de particules submicroniques.

### Exemple 5 : Obtention d'une poudre de fer grâce à un alcool simple.

De façon analogue à l'exemple précédent, la même quantité de chlorure de fer (II) tétrahydraté est dispersée dans une solution d'hydroxyde de sodium dans l'octanol-1, à la même concentration (10 g dans 250 cm³). Le mélange est maintenu à 115°C pendant 30 minutes. La poudre obtenue est un mélange de Fe₃O₄ et de Fe-α ; elle est formée également de particules submicroniques.

### Exemple 6 : Obtention d'une poudre de fer-nickel grâce à un polyol.

Deux solutions sont préparées. La première contient un mélange de 8,5 g de chlorure de fer (II)FeCl₂, 4H₂O et de 10 g de chlorure de nickel (II) NiCl₂, 6H₂O dissous dans 200 cm³ de propylèneglycol (les proportions molaires Fe(II)/Ni(II) sont donc 50/50). La seconde contient 20 g d'hydroxyde de sodium dans 200 cm³ de propylèneglycol. Les deux solutions sont mélangées à froid et l'ensemble est traité comme dans les exemples précédents, c'est-à-dire porté à ébullition pendant quelques heures avec distillation de l'eau et des produits organiques légers issus de la réaction chimique. La poudre métallique obtenue est lavée successivement à l'éthanol, a l'eau et à l'acétone.

Les analyses chimiques montrent que les éléments fer et nickel sont présents dans cette poudre dans les proportions massiques finales Fe/Ni=25/75. L'examen en diffraction des rayons X montre une seule phase cristallisée de type c.f.c. Observée en microscopie électronique, la poudre apparaît être composée de particules sphériques, très homogènes en taille et non agglomérées. Le diamètre moyen des particules et l'écart type de la distribution des tailles, déterminés par analyse d'image sur 250 particules environ, ont pour valeurs respectives dₘ = 130 nm et σ = 18 nm. Les analyses X montrent que chaque particule contient le fer et le nickel dans les proportions 25/75, une cartographie des deux éléments ne permet pas d'observer de ségrégation dans les particules. L'examen en spectroscopie Mössbauer montre un environnement local moyen des atomes de fer correspondant à la composition globale. Ces différentes techniques de caractérisations semblent indiquer l'existence d'une solution solide des deux éléments dans les particules.

### Exemple 7 : Obtention d'une poudre de fer-nickel grâce à un polyol.

Une solution contenant 8,5 g de chlorure de fer(II) FeCl₂, 4H₂O et 10 g de chlorure de nickel(II) NiCl₂, 6H₂O dissous dans 200 cm³ d'éthylèneglycol est mélangée à froid à une solution contenant 32 g d'hydroxyde de sodium dissous dans 200 cm³ d'éthylèneglycol. Le mélange es traité de façon analogue à l'exemple précédent. La poudre métallique obtenue contient les éléments fer et nickel dans les proportions massiques suivantes Fe/Ni=18/82. L'examen en microscopie électronique à balayage montre une poudre composée de particules sphériques, homogènes en taille et non agglomérées, de diamètre moyen dₘ = 100 nm et d'écart type σ=15 m.

### Exemple 8 : Obtention d'une poudre de fer-nickel grâce à un polyol.

Une solution contenant 8,5 g de chlorure de fer(II) FeCl₂, 4H₂O et 10,5 g d'acétate de nickel(II) Ni(CH₃CO₂)₂, 4H₂O dissous dans 200 cm³ d'éthylèneglycol est mélangée à froid à une solution contenant 32 g d'hydroxyde de sodium dissous dans 200 cm³ d'éthylèneglycol. La poudre obtenue après traitement du mélange à 175°C pendant 1 heure est composée de particules sphériques, homogènes en taille et non agglomérées, de diamètre moyen dₘ=200 nm.

### Exemple 9 : Obtention d'une poudre de fer-nickel grâce à un alcool simple.

A température ambiante sont dispersés dans 250 cm³ d'octanol-1 : 10 g d'acétate de nickel(II) Ni(CH₃CO₂)₂,4H₂O, 8g de chlorure de fer(II) FeCl₂, 4H₂O et 5 g d'hydroxyde de sodium. Le mélange est porté à ébullition (190°C) et maintenu à cette température pendant 5 heures. La poudre obtenue, lavée à l'alcool puis à l'eau, est un mélange de Fe₃O₄ et d'une phase métallique de structure c.f.c. caractérisée par un paramètre cristallin nettement différent de celui du nickel. La poudre est composée de particules submicroniques agglomérées et peu homogènes en taille.

### Exemple 10 : Obtention d'une poudre de fer-cobalt grâce à un polyol.

Une solution contenant 11,2 g de chlorure de fer(II) FeCl₂, 4H₂O et 6,8g de chlorure de cobalt(II) CoCl₂, 6H₂O dissous dans 200 cm³ d'éthylèneglycol est mélangée à froid à une solution contenant 32 g d'hydroxyde de sodium dissous dans 200 cm³ d'éthylèneglycol. Le mélange est traité comme dans les exemples précédents. La poudre métallique obtenue contient les éléments fer et cobalt dans les proportions massiques suivantes Fe/Co = 20/80. Elle est composée de particules agglomérées, peu homogènes en taille et de taille moyenne 0,5 µm. La poudre possède une aimantation à saturation de 155 uem/g.

### Exemple 11 : Obtention d'une poudre de fer-cobalt-nickel grâce à un polyol.

Une solution contenant 5,6 g de chlorure de fer(II) FeCl₂, 4H₂O, 10,5g de chlorure de cobalt(II) CoCl₂, 6H₂O et 2,7g de chlorure de nickel(II)NiCl₂, 6H₂O dissous dans 200 cm³ d'éthylèneglycol est mélangée à froid à une solution contenant 32g d'hydroxyde de sodium dissous dans 200 cm³ d'éthylèneglycol. La poudre obtenue après traitement du mélange à 195°C pendant 3 heures contient les éléments fer, cobalt et nickel dans les proportions massiques respectives 13 %, 67 % et 20 %. La poudre est composée de particules sphériques homogènes en taille et non agglomérées, de diamètre moyen dₘ=120 nm.

Les poudres obtenues, notamment celles obtenues grâce à l'utilisation de polyols, sont constituées de particules de forme isotrope quasi-sphérique. Elles sont peu agglomérées entre elles. Elles sont généralement de taille submicronique et d'une très grande homogénéité de taille. Il est raisonnable de parler de poudres monodisperses.

Ces poudres ne sont pas pyrophoriques, une couche d'oxyde les protégeant de l'oxydation brutale.

Les poudres de fer sont caractérisées par leur diagramme de diffraction des rayons X, elles présentent une structure cristalline cubique centrée, soit la phase Fe-α. Ces poudres sont ferromagnétiques et la mesure de leur aimantation à saturation donne des valeurs proches de celles de matériaux massifs. La proportion d'impuretés est relativement faible et on peut procéder à un traitement thermique sous hydrogène gazeux à des températures peu élevées pour diminuer le taux de carbone et d'oxygène sans fritter les poudres.

Les poudres polymétalliques présentent en diffraction des rayons X une seule ou plusieurs phases cristallines suivant leur composition chimique. Leurs spectres Mössbauer montrent que le fer dans ces poudres est bien au degré d'oxydation 0 et présente un couplage ferromagnétique. La mesure de leur aimantation à saturation donne d'ailleurs des valeurs proches de celles de matériaux massifs. La microanalyse X permet de montrer que chaque particule contient les différents éléments dans les proportions globales de la poudre et, suivant la composition de la poudre, on peut observer un gradient de composition plus ou moins marqué entre le coeur et l'extérieur des particules.

## Revendications

1. Procédé d'obtention d'une poudre de fer comprenant éventuellement du nickel et/ou du cobalt, par précipitation en phase liquide organique, comportant les étapes de :
- introduction d'un précurseur du fer au degré d'oxydation (II) et éventuellement d'un précurseur du nickel au degré d'oxydation (II) et/ou d'un précurseur du cobalt au degré d'oxydation (II) dans une solution basique de polyol ou d'un mélange de polyols pour obtenir un milieu réactionnel,
- chauffage du milieu réactionnel à une température permettant d'éliminer l'eau et les produits volatils du milieu réactionnel et d'obtenir un précipité de fer comprenant éventuellement du nickel et/ou du cobalt,
- récupération du précipité et traitement de ce précipité pour obtenir ladite poudre.

2. Procédé selon la revendication 1, caractérisé en ce qu'on utilise comme polyol l'éthylèneglycol, le propylèneglycol ou le diéthylèneglycol.

3. Procédé selon l'une des revendications 1 ou 2, caractérisé en ce que la solution de polyol, ou d'un mélange de polyols, a été rendue basique par ajout de soude ou de potasse.

4. Procédé d'obtention d'une poudre de fer comprenant éventuellement du nickel, par précipitation en phase liquide organique, comportant les étapes de :
- introduction d'un précurseur du fer au degré d'oxydation (II) et éventuellement d'un précurseur du nickel au degré d'oxydation (II) dans une solution basique d'alcool simple ou d'un mélange d'alcools simples pour obtenir un milieu réactionnel,
- chauffage dudit milieu réactionnel à une température au moins égale à 100°C permettant éventuellement d'éliminer l'eau et les produits volatils du milieu réactionnel et d'obtenir un précipité de fer comprenant éventuellement du nickel,
- récupération du précipité et traitement de ce précipité pour obtenir ladite poudre.

5. Procédé selon la revendication 4, caractérisé en ce qu'on utilise comme alcool le pentanol-1 ou l'octanol-1.

6. Procédé selon l'une des revendications 4 ou 5, caractérisé en ce que la solution d'alcool, ou d'un mélange d'alcools, a été rendue basique par ajout de soude ou de potasse.

7. Procédé selon l'une quelconque des revendications 1 à 6, caractérisé en ce que lesdits précurseurs sont des chlorures ou des acétates.

8. Procédé selon l'une quelconque des revendications précédentes, caractérisé en ce que le traitement du précipité est réalisé par lavage à l'alcool, ensuite à l'eau acidifiée, puis à l'acétone, ces opérations étant suivies d'un séchage à l'étuve ou sous pression réduite.

## Claims

1. Process for obtaining an iron powder optionally incorporating nickel and/or cobalt, by organic liquid phase precipitation, comprising the stages of:
- introducing a precursor of iron with an oxidation degree (II) and optionally a precursor of nickel of oxidation degree (II) and/or a precursor of cobalt of oxidation degree (II) into a basic solution of polyol or a mixture of polyols to obtain a reaction medium,
- heating the reaction medium to a temperature permitting the elimination of the water and volatile products of the reaction medium and the obtaining of an iron precipitate optionally incorporating nickel and/or cobalt,
- recovery of the precipitate and treatment of said precipitate to obtain said powder.

2. Process according to claim 1, characterized in that the polyol used is ethylene glycol, propylene glycol or diethylene glycol.

3. Process according to one of the claims 1 or 2, characterized in that the solution of polyol or a mixture of polyols was rendered basic by adding soda or potash.

4. Process for obtaining an iron powder optionally incorporating nickel, by organic liquid phase precipitation, comprising the stages of:
- introducing a precursor of iron with an oxidation degree (II) and optionally a precursor of nickel with an oxidation degree (II) into a basic solution of simple alcohol or a mixture of simple alcohols in order to obtain a reaction medium,
- heating said reaction medium to a temperature at least equal to 100°C optionally permitting the elimination of the water and volatile products of the reaction medium and the obtaining of an iron precipitate, optionally incorporating nickel,
- recovery of the precipitate and treatment of said precipitate to obtain said powder.

5. Process according to claim 4, characterized in that 1-pentanol or 1-octanol is used as the alcohol.

6. Process according to one of the claims 4 or 5, characterized in that the solution of alcohol or a mixture of alcohols was rendered basic by adding soda or potash.

7. Process according to any one of the claims 1 to 6, characterized in that the precursors are chlorides or acetates.

8. Process according to any one of the preceding claims, characterized in that the precipitate is treated by washing with alcohol, followed by acidified water and then acetone, said operations being followed by a drying in the oven or under reduced pressure.

## Patentansprüche

1. Verfahren zur Gewinnung eines Eisenpulvers, das gegebenenfalls Nickel und/oder Cobalt enthält, durch Ausfällung in flüssiger organischer Phase, umfassend die Schritte der:
- Einbringung eines Eisen-Vorläufers mit der Oxidationsstufe (II) und gegebenenfalls eines Nickel-Vorläufers mit der Oxidationsstufe (II) und/oder eines Cobalt-Vorläufers mit der Oxidationsstufe (II) in eine basische Lösung eines mehrwertigen Alkohols oder einer Mischung mehrwertiger Alkohole, um ein Reaktionsmedium zu erhalten,
- Erwärmung des Reaktionsmediums auf eine Temperatur, die es erlaubt, das Wasser und die flüchtigen Reaktionsprodukte aus dem Reaktionsmedium zu entfernen und einen Niederschlag von Eisen zu erhalten, der gegebenenfalls Nickel und/oder Cobalt enthält,
- Wiedergewinnung des Niederschlags und Behandlung dieses Niederschlags, um das genannte Pulver zu erhalten.

2. Verfahren nach Anspruch 1, dadurch gekennzeichnet, daß man als mehrwertigen Alkohol Ethylenglycol, Propylenglycol oder Diethylenglycol verwendet.

3. Verfahren nach einem der Ansprüche 1 oder 2, dadurch gekennzeichnet, daß die Lösung von mehrwertigen Alkohols oder einer Mischung mehrwertiger Alkohole durch Zugabe von Natriumhydroxid oder Kaliumhydroxid basisch gemacht wurde.

4. Verfahren zur Gewinnung eines Eisenpulvers, das gegebenenfalls Nickel enthält, durch Ausfällung in flüssiger organischer Phase, umfassend die Schritte der:
- Einbringung eines Eisen-Vorläufers mit der Oxidationsstufe (II) und gegebenenfalls eines Nickel-Vorläufers mit der Oxidationsstufe (II) in eine basische Lösung eines einfachen Alkohols oder einer Mischung einfacher Alkohole, um ein Reaktionsmedium zu erhalten,
- Erwärmung des genannten Reaktionsmediums auf eine Temperatur von mindestens 100°C, die es gegebenenfalls erlaubt, das Wasser und die flüchtigen Reaktionsprodukte aus dem Reaktionsmedium zu entfernen und einen Niederschlag von Eisen zu erhalten, der gegebenenfalls Nickel enthält,
- Wiedergewinnung des Niederschlags und Behandlung dieses Niederschlags, um das genannte Pulver zu erhalten.

5. Verfahren nach Anspruch 4, dadurch gekennzeichnet, daß man als Alkohol Pentanol-1 oder Octanol-1 verwendet.

6. Verfahren nach einem der Ansprüche 4 oder 5, dadurch gekennzeichnet, daß die Lösung von Alkohol oder einer Mischung von Alkoholen durch Zugabe von Natriumhydroxid oder Kaliumhydroxid basisch gemacht wurde.

7. Verfahren nach einem der Ansprüche 1 bis 6, dadurch gekennzeichnet, daß die genannten Vorläufer Chloride oder Acetate sind.

8. Verfahren nach einem der vorhergehenden Ansprüche, dadurch gekennzeichnet, daß die Behandlung des Niederschlags durch Waschen mit Alkohol, dann mit angesäuertem Wasser, dann mit Aceton erfolgt, wobei diese Operationen von einer Trocknung im Trockenschrank oder unter vermindertem Druck gefolgt werden.
